# EUROPEAN PATENT SPECIFICATION

(11) **EP 0 733 801 B1**
(45) Date of publication and mention of the grant of the patent: **12.01.2000**
(21) Application number: 96107858.1
(22) Date of filing: 24.11.1993
(51) Int. Cl.: F04B 39/00, F04B 39/04

(54) **Motor-compressor unit**
Motor-Verdichter-Einheit
Unité moteur-compresseur

(30) Priority: 22.12.1992 IT MI922923
(43) Date of publication of application: 25.09.1996
(62) Divisional of application: 93118887.4
(73) Proprietor: EMBRACO EUROPE S.r.l., I-10121 Torino (IT)
(72) Inventor: Bianchi, Vittorio, c/o Whirlpool Italia S.R.L., 21025 Comerio, Varese (IT); Maironi, Giuseppe, c/o Whirlpool Italia S.R.L., 21025 Comerio, Varese (IT)
(74) Representative: Saconney, Piero

(56) References cited:
- EP-A- 0 462 927
- CH-A- 668 458

## Description

This invention relates to a motor-compressor unit according to the preamble of claim 1 (see e.g. EP-A-0 462 927).

In the most usual small hermetic motor-compressor units the piston is not provided with piston rings for reasons related to construction cost. For these reasons such units have a low efficiency.

The object of the invention is to provide a motor-compressor unit of the aforesaid type whose compressor section is of simple construction, has a high operating efficiency, these advantages being achieved by low-cost, simple and rapidly effected modifications.

According to the invention this object is attained by a motor-compressor unit as claimed.

As will be better understood from the description referred to the drawings, a motor-compressor unit according to the invention has a high operating efficiency thanks to the fact that the recesses in the jacket and in the wall carry out a recovery of the fluid which escapes from the compression chamber.

The present invention will be more apparent from the description referred to the accompanying drawings, in which:
figures 1, 2 and 3 show a longitudinal sectional view of the compressor section of the motor-compressor unit according to the invention, in different stages of operation; and
figure 4 is a longitudinal sectional view of a modification of the compressor section of Figures 1, 2 and 3.

With reference to said figures, a motor-compressor unit of hermetic type for use in a refrigerator, a freezer or the like, comprises a section 1 for compressing a refrigerant fluid of know type. The compressing section 1 comprises a connecting rod 2, a piston 3 and a cylinder 4, with one end 5 of which there is associated a usual valve plate 6.

The connecting rod 2 comprises an end associated in known manner with a rotating crank shaft driven by an electric motor (both not shown).

The piston 3 is arranged to slide within the usual bore 7 of the cylinder 4, which is closed at its end 5 by the valve plate 6. The refrigerant fluid reaches the bore 7 in known manner and is compressed by the piston 3, which moves longitudinally within the bore 7, being driven by the connecting rod 2 associated with the drive shaft.

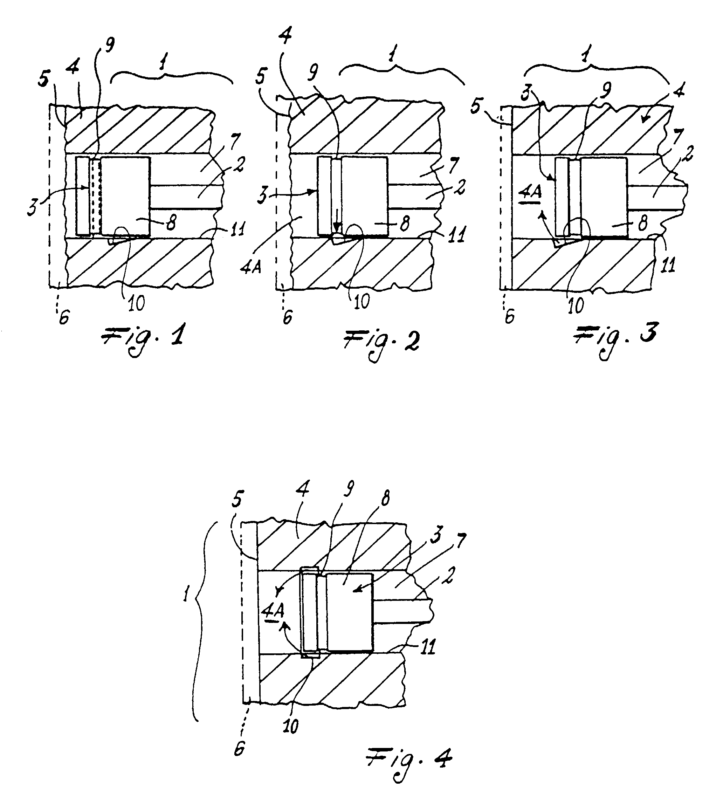

The piston comprises an outer jacket 8 in which an annular recess 9 is provided. At least one recess 10 is also provided at least partly in the wall 11 of the bore 7, said recess either being limited to at least one portion of said wall (as in figures 2 and 3) or being an annular recess (as in figure 4).

When the compressor is in operation, during the fluid compression within the cylinder 4 the fluid which escapes from its compression chamber 4A penetrates into the annular recess 9 running along its jacket 8. During the return stroke of the piston 3, the fluid which has collected in the annular recess 9 in the jacket 8 passes into the recess 10 in the wall 11 of the bore 7 of the cylinder 4 and collects therein. In this manner at least part of the fluid which escapes from the compression chamber is recovered by its passing into the chamber 4A when the piston 3 moves towards its bottom dead centre, and is recompressed by the piston 3 when this moves again towards its top dead centre.

In this manner there is little or even no dispersion of the refrigerant fluid within the motor-compressor unit.

The refrigerant fluid recovered via the recesses 9 and 10 in the piston 3 and the cylinder 4 is prevented from dispersing by the opening (achieved in known manner) of the usual valves in the plate 6.

## Claims

1. A motor-compressor unit comprising a compressor section (1) which includes a cylinder (4) with a cylinder bore (7) defined by a cylinder wall (11), a piston (3) with an outer jacket (8) sliding in the cylinder bore (7) and driven through a connecting rod (2) by a drive shaft operated by an electric motor, and a valve plate (6) by which the cylinder bore (7) is closed at one end (5) opposite to the drive shaft, and wherein a compression chamber (4A) is defined, in the cylinder bore (7), between the piston (3) and the valve plate (6),
characterised in that the jacket (8) of the piston (3) has at least one recess (9) for receiving any fluid which leaks from the compression chamber (4A) of the cylinder (4) during the compression stroke of said piston in its movement within said cylinder (4), and in that the cylinder (4) has, in the wall (11) of the bore (7) containing the piston (3), at least one recess (10) for collecting at least part of said fluid which leaks into the recess (7) in the piston.

2. A motor-compressor unit as claimed in claim 1, characterised in that the recess (9) in the jacket (8) of the piston (3) is annular.

3. A motor-compressor unit as claimed in claim 1 or 2, characterised in that the recess (10) in the wall (11) of the cylinder (4) is annular.

## Patentansprüche

1. Motor-Kompressor-Einheit mit einem Kompressorteil (1), welcher einen Zylinder (4) mit einer von einer Zylinderwand (11) definierten Zylinderbohrung (7), einen Kolben (3) mit einem Außenmantel (8), der in der Zylinderbohrung (7) gleitet und über eine Pleuelstange (2) durch eine von einem Elektromotor betriebene Antriebswelle angetrieben wird, und eine Ventilplatte (6) aufweist, durch welche die Zylinderbohrung (7) an einem Ende (5) gegenüber der Antriebswelle verschlossen ist, und wobei in der Zylinderbohrung (7) zwischen dem Kolben (3) und der Ventilplatte (6) eine Kompressionskammer (4A) definiert ist, dadurch gekennzeichnet, dass der Mantel (8) des Kolbens (3) zumindest eine Ausnehmung (9) hat zur Aufnahme jeglichen Fluids, das aus der Kompressionskammer (4A) des Zylinders (4) während des Kompressionshubes des Kolbens bei seiner Bewegung innerhalb des Zylinders (4) austritt, und dass der Zylinder (4) in der Wand (11) der Bohrung (7), die den Kolben (3) enthält, zumindest eine Ausnehmung (10) zum Sammeln mindestens eines Teils des Fluids, welches in die Ausnehmung (7) im Kolben eintritt, aufweist.

2. Motor-Kompressor-Einheit nach Anspruch 1, dadurch gekennzeichnet, dass die Ausnehmung (9) im Mantel (8) des Kolbens (3) ringförmig ist.

3. Motor-Kompressor-Einheit nach Anspruch 1 oder 2, dadurch gekennzeichnet, dass die Ausnehmung (10) in der Wand (11) des Zylinders (4) ringförmig ist.

## Revendications

1. Bloc motocompresseur comprenant une partie compresseur (1) qui comprend un cylindre (4) pourvu d'un alésage (7) de cylindre défini par une paroi (11) de cylindre, un piston (3) muni d'une chemise extérieure (8) coulissant dans l'alésage (7) de cylindre et entraîné à l'aide d'une bielle (2) par un arbre d'entraînement actionné par un moteur électrique, et une plaque porte-soupapes (6) au moyen de laquelle l'alésage (7) de cylindre est fermé à une extrémité (5) située à l'opposé de l'arbre d'entraînement, une chambre de compression (4A) étant définie, dans l'alésage (7) de cylindre, entre le piston (3) et la plaque porte-soupapes (6).
caractérisé en ce que la chemise (8) du piston (3) comporte au moins un évidement (9) destiné à recevoir toute fuite de fluide en provenance de la chambre de compression (4A) du cylindre (4) pendant la course de compression dudit piston lors de son déplacement à l'intérieur dudit cylindre (4), et en ce que le cylindre (4) comporte, dans la paroi (11) de l'alésage (7) contenant le piston (3), au moins un évidement (10) destiné à recueillir au moins une partie de ladite fuite de fluide qui pénètre dans l'évidement (7) du piston.

2. Bloc motocompresseur selon la revendication 1, caractérisé en ce que l'évidement (9) de la chemise (8) du piston (3) est annulaire.

3. Bloc motocompresseur selon la revendication 1 ou 2, caractérisé en ce que l'évidement (10) de la paroi (11) du cylindre (4) est annulaire.
